# EUROPEAN PATENT APPLICATION

(11) **EP 2 023 595 A2**
(43) Date of publication of application: **11.02.2009**
(21) Application number: 08161943.9
(22) Date of filing: 06.08.2008
(51) Int. Cl.: H04N 1/387

(54) **Image-processing apparatus, image-processing method, and computer program**

(30) Priority: 06.08.2007 JP 2007204561
(71) Applicant: Canon Kabushiki Kaisha, Tokyo 146-8501 (JP)
(72) Inventor: Sasaki, Hidemi, Ohta-ku, Tokyo (JP)
(74) Representative: Garner, Jonathan Charles Stapleton

(57) **Abstract**

An image-processing apparatus includes acquiring means (5032) configured to acquire sheet size information concerning a sheet size set for printing and drawing range size information concerning a drawing range size from print data; determining means (5032) configured to determine whether the sheet size matches the drawing range size; first selecting means (5035, 5036) configured to select a sheet on which an image based on the print data is to be formed and a drawing range of the image on the basis of print setting information set for printing of the print data if the sheet size does not match the drawing range size; and first generating means (5032, 5033) configured to generate image data used for generating the image on the sheet by using the print data in accordance with the sheet and the drawing range selected by the first deciding means.

## Description

### BACKGROUND OF THE INVENTION

### Field of the Invention

The present invention relates to image-processing apparatuses, image-processing methods, and computer programs. More particularly, the present invention relates to an image-processing apparatus, an image-processing method, and a computer program preferably used in formation of an image based on print data, such as PDL data.

### Description of the Related Art

Hitherto, technologies for preventing undesired print results from being output in printing of images on sheets have been proposed.

Japanese Patent Laid-Open No. 11-4339 discloses a technology for cutting out and printing an image. In the technology, when an image is selected by a user from images that have the same content, that are fit in frames of different sizes, and that are displayed in a selection window, the image is cut out and printed in accordance with the corresponding frame. Japanese Patent Laid-Open No. 2003-112466 discloses a technology for causing a user to select forced printing or reduced printing when an incorrect sheet size is specified. Japanese Patent Laid-Open No. 2007-79819 discloses a technology for selecting a sheet having an aspect ratio closest to the aspect ratio of a drawing area when multiple sheets having the minimum margin are provided and printing data on the selected sheet.

Electronic document formats for such printing include Portable Document Format (PDF). The PDF is in widespread use in display of data in a display apparatus, in printing of data with a printer apparatus, and for final data for publication. Several boundary boxes can be defined for each page in a document in the PDF. The boundary boxes include a sheet boundary box (media box) by which a sheet size is defined and a drawing boundary box (crop box) by which a drawing range is defined.

Data generated in the PDF (hereinafter referred to as PDF data) is mainly printed by the following two methods.

A first printing method is direct print in which image formation is performed on the basis of PDF data without using a printer driver. In the direct print, it is desirable that a printer automatically select a sheet to be used in the printing on the basis of the value (size) of the sheet boundary box defined in the PDF data.

A second printing method is driver print using a driver. In the driver print, a host computer displays PDF data by using an application. Then, the PDF data is converted into data described in a page description language (PDL) (hereinafter referred to as PDL data) by a printer driver and is transmitted to a printer. Since the printer displays the PDF data on the basis of the value of the drawing boundary box in the driver print, it is desirable that the printer automatically select a sheet to be used in the printing on the basis of the value (size) of the drawing boundary box.

The direct print differs from the driver print in the reference boundary box. Accordingly, if the sheet boundary box does not agree with the drawing boundary box, there is a problem in that different results are output by the above two printing methods. However, the technologies disclosed in the patent documents described above do not consider this problem.

The disagreement between the sheet boundary box and the drawing boundary box can occur when a data generator intends the disagreement and when the data generator does not intend the disagreement. The disagreement between the boundary boxes intentionally caused by the data generator is exemplified by a case in which the output size and region in screen display is made different from that in printing. For example, when PDF data is used as final data for print on demand (POD), auxiliary information including a color bar and a printer mark can be drawn outside the drawing boundary box. In such a case, the disagreement between the boundary boxes intentionally caused by the data generator allows the color bar and the printer mark to be printed in the printing but not to be displayed in the screen display.

In contrast, the disagreement between the boundary boxes despite of the data generator who does not intend the disagreement is exemplified by a case in which the disagreement is caused by a mistake during operation. For example, if only the drawing boundary box is changed when PDF data that was generated for printing by a printer used in the POD is diverted to distribution over a network, the disagreement between the boundary boxes occurs.

Since the output result of data in the direct print is different from the output result of the same data in the driver print when the drawing boundary box does not agree with the sheet boundary box, the disagreement between the boundary boxes is apparently inconvenient for a person who performs the printing.

In particular, there are many cases in which data is printed by a person different from the data generator in commercial printing, such as the POD. In such cases, the data can be output in a sheet size that is not intended by the data generator because different boundary boxes are used to select a sheet in different printing methods. Accordingly, it is necessary for the person who performs the printing to confirm the sheet size to the data generator and to change the sheet size, if needed, thus reducing the productivity and efficiency of the printing.

There are cases in which data is not drawn from end to end of a sheet because of any problem of a device and a portion where the data is not drawn can be produced near an end. In such a case, after the data is drawn in a slightly larger sheet so as to be off the sheet, part of the sheet is cut out. The portion off the sheet is called a "bleed". However, clipping in accordance with the drawing boundary box causes the bleed portion not to be drawn.

With the technology disclosed in Japanese Patent Laid-Open No. 11-4339, it is necessary for a user to manually specify a desired region to cut out the region. Accordingly, when the sheet boundary box does not agree with the drawing boundary box, the application of the technology disclosed in Japanese Patent Laid-Open No. 11-4339 imposes a heavier burden on the user. Consequently, the technology disclosed in Japanese Patent Laid-Open No. 11-4339 is inappropriate for processing of a large amount of data. The technology disclosed in Japanese Patent Laid-Open No. 2003-112466 is applied when a physical sheet size that cannot be processed is selected. Accordingly, it is difficult to apply the technology disclosed in Japanese Patent Laid-Open No. 2003-112466 when a physical sheet size that can be processed is specified but the disagreement between the sheet boundary box and the drawing boundary box occurs. The technology disclosed in Japanese Patent Laid-Open No. 2007-79819 is used to select a sheet. Accordingly, when drawing content that is not intended by a data generator is included in image data and the disagreement between the sheet boundary box and the drawing boundary box occurs, the drawing content is also considered as a criterion of selecting a sheet and it is not possible to output the image data on an appropriate sheet.

As described above, in the related art, there is a problem in that it is difficult to appropriately output an image when the drawing boundary box, which is information indicating a drawing range, does not agree with the sheet boundary box, which is information indicating a sheet size.

### SUMMARY OF THE INVENTION

In order to resolve the above problems, it is desirable to easily and appropriately output an image even if the size of a drawing range defined in print data does not agree with the size of a sheet defined therein.

The present invention in its first aspect provides an image-processing apparatus as specified in Claims 1 to 8.

The present invention in its second aspect provides an image-processing apparatus as specified in Claim 9.

The present invention in its third aspect provides an image-processing method as specified in Claim 10.

The present invention in its fourth aspect provides an image-processing method as specified in Claim 11.

The present invention in its fifth aspect provides a computer-readable storage medium storing a program as specified in Claim 13.

The present invention in its sixth aspect provides a computer-readable storage medium storing a program as specified in Claim 15.

Further features of the present invention will become apparent from the following description of exemplary embodiments with reference to the attached drawings.

### BRIEF DESCRIPTION OF THE DRAWINGS

Fig. 1 is a block diagram showing an example of the configuration of a multifunction apparatus according to a first exemplary embodiment of the present invention.

Fig. 2 is a block diagram showing an example of the configuration of an image-forming system according to the first exemplary embodiment of the present invention.

Figs. 3A to 3D show examples of print results in drawing modes, according to the first exemplary embodiment of the present invention.

Fig. 4 is a flowchart showing an example of an image-forming process in the multifunction apparatus when a sheet boundary box does not agree with a drawing boundary box, according to the first exemplary embodiment of the present invention.

Fig. 5 shows an example of a graphical user interface used for selecting a drawing mode in accordance with print settings, according to the first exemplary embodiment of the present invention.

Fig. 6 shows an example of a graphical user interface used for making settings related to paper feed, according to the first exemplary embodiment of the present invention.

Fig. 7 is a flowchart showing an example of a method of selecting a drawing mode on the basis of PDL data, according to the first exemplary embodiment of the present invention.

Fig. 8 shows an exemplary table in which settings for a sheet boundary counter and a drawing boundary counter are stored, according to the first exemplary embodiment of the present invention.

Fig. 9 shows an example of a graphical user interface used for causing a user to select a drawing mode when the drawing mode cannot be estimated on the basis of the PDL data, according to the first exemplary embodiment of the present invention.

Fig. 10 shows an exemplary screen in which the print results corresponding to the drawing modes are displayed, according to the first exemplary embodiment of the present invention.

Figs. 11A to 11D show a first example of the method of selecting a drawing mode on the basis of the PDL data, according to the first exemplary embodiment of the present invention.

Figs. 12A and 12B show a second example of the method of selecting a drawing mode on the basis of the PDL data, according to the first exemplary embodiment of the present invention.

Fig. 13 is a flowchart showing an example of a method of selecting a drawing mode according to a fourth exemplary embodiment of the present invention.

### DESCRIPTION OF THE EMBODIMENTS

### First Exemplary Embodiment

A first exemplary embodiment of the present invention will now be described with reference to the attached drawings.

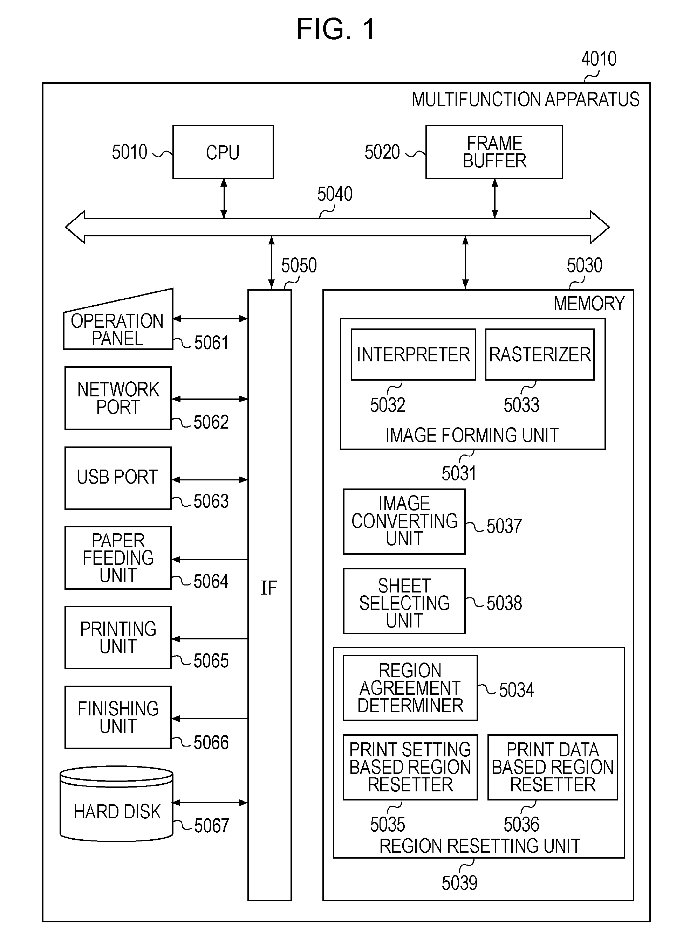

Fig. 1 is a block diagram showing an example of the configuration of a multifunction apparatus 4010.

In the multifunction apparatus 4010 in Fig. 1, a central processing unit (CPU) 5010 performs, for example, calculation, determination, and input and output of information in accordance with programs stored in a memory 5030. A frame buffer 5020 is a memory temporarily storing image data generated by using the programs stored in the memory 5030. The memory 5030 includes, for example, a read only memory (ROM) and a random access memory (RAM) and stores the programs and so on. The components (from an image-forming unit 5031 to a region-resetting unit 5039) in the memory 5030 mean the programs stored in the memory 5030. Each component in the memory 5030 will now be described.

The image-forming unit 5031 is a program used for generating image data to be printed on the basis of PDL data described in the PDL, which is a language for printing. As described above, the image data generated by the image-forming unit 5031 is stored in the frame buffer 5020. The image-forming unit 5031 includes an interpreter 5032 and a rasterizer 5033. Although the rasterizer 5033 is realized by software in the example shown in Fig. 1, the rasterizer may be realized by hardware.

An image-converting unit 5037 performs, for example, compression and color conversion to the image data generated by using the programs stored in the memory 5030.

A sheet-selecting unit 5038 is a program used for selecting a sheet (physical sheet) actually used in printing for a logical sheet size. The sheet-selecting unit 5038 selects a sheet appropriate for the sheet size specified in the input PDL data and indicates the selected sheet to a paper-feeding unit 5064.

The region-resetting unit 5039 is a program used for setting a region appropriate for drawing or printing on the basis of conditions for the image formation and printing and the PDL data. The region-resetting unit 5039 includes a region agreement determiner 5034, a print setting based region resetter 5035, and a print data based region resetter 5036.

The region agreement determiner 5034 determines whether a specified sheet region of each page agrees with a specified drawing region thereof. The specified sheet region indicates the size of a region defined by the sheet boundary box (information specifying a sheet size) included in the PDL data, that is, indicates the size of a sheet. The specified drawing region indicates the size of a region defined by the drawing boundary box (information specifying a drawing range) included in the PDL data, that is, indicates the size of a drawing range.

The print setting based region resetter 5035 sets a region on the basis of print settings.

The print data based region resetter 5036 sets a region on the basis of print data.

A system bus 5040 is a unit through which information is transmitted and received among the CPU 5010, the frame buffer 5020, an interface (INF) 5050, and the memory 5030.

The interface 5050 is used in data exchange in the multifunction apparatus 4010.

An operation panel 5061, a network port 5062, and a universal serial bus (USB) port 5063 are mainly used for information exchange with external apparatuses. The operation panel 5061 is used by a user to make various settings for the multifunction apparatus 4010. The operation panel 5061 includes, for example, an image display unit and an operation unit.

The network port 5062 is used for connection to a network. The multifunction apparatus 4010 is capable of transmitting and receiving PDL data or the like through the network port 5062. In addition, the multifunction apparatus 4010 can use the network port 5062 to exchange information indicating the management status of the multifunction apparatus 4010 with external apparatuses and to provide a user interface used for making the various settings for the multifunction apparatus 4010 instead of the operation panel 5061.

The USB port 5063 is used to connect the multifunction apparatus 4010 to another peripheral device and to connect the multifunction apparatus 4010 to a computer, such as a personal computer, as a peripheral device. The USB port 5063 is also used for connection to a USB memory, which is a storage device using a high-capacity nonvolatile memory, or a mobile phone in recent years.

The paper-feeding unit 5064, a printing unit 5065, and a finishing unit 5066 are used by the multifunction apparatus 4010 to function as a printer apparatus.

The paper-feeding unit 5064 holds a paper medium and supplies the paper medium to the printing unit 5065, as needed. The paper-feeding unit 5064 is mounted as a tray (trays) in a lower part of the multifunction apparatus 4010 or is mounted as a deck (decks) at a side of the multifunction apparatus 4010. The paper-feeding unit 5064 may be mounted on the multifunction apparatus 4010 as a unit for manual paper feed.

The printing unit 5065 is used to reproduce the image data stored in the frame buffer 5020 on a sheet fed by the paper-feeding unit 5064 with, for example, coloring agent. Although the printing unit 5065 is realized as, for example, an electrophotographic printing unit, an inkjet printing unit, or a printing unit using heat-sensitive paper, the printing unit 5065 is not limited to the above ones.

The finishing unit 5066 performs finishing processes including bookbinding and folding to the sheet printed by the printing unit 5065. The finishing unit 5066 is not an essential component of the multifunction apparatus 4010 (printer apparatus) and may be omitted in the multifunction apparatus 4010.

A hard disk 5067 stores a variety of information, such as data received through the network port 5062 and image data generated by the image-forming unit 5031.

An image-forming system including the multifunction apparatus 4010 having the above configuration will now be described.

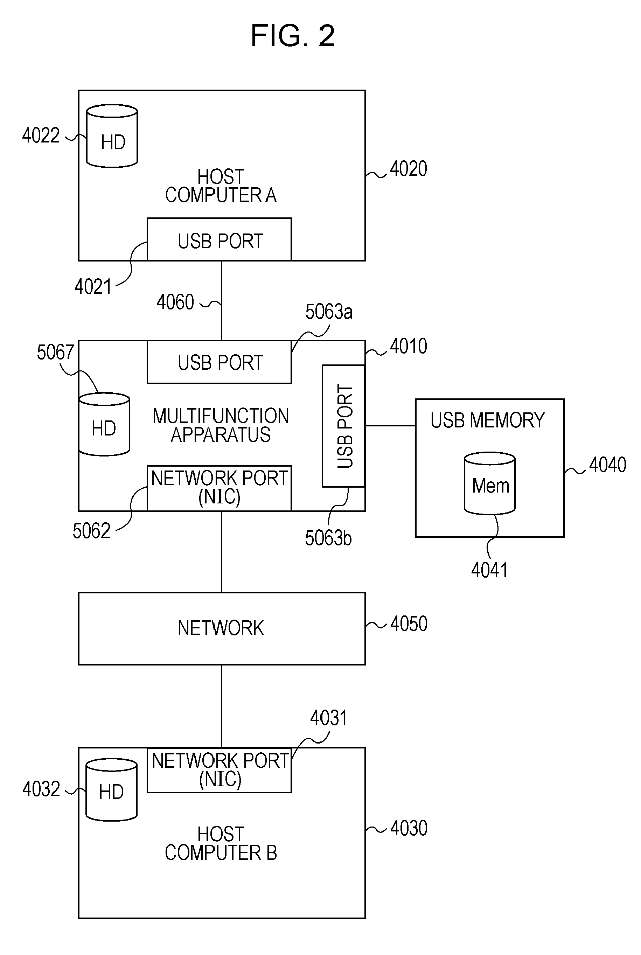

Fig. 2 is a block diagram showing an example of the configuration of the image-forming system. Attention is focused on the data flow in the image-forming system.

As described above, the multifunction apparatus 4010 includes USB ports 5063a and 5063b, the network port (network interface card (NIC)) 5062, and the hard disk 5067.

The USB port 5063a is connected to a USB port 4021 in a host computer A 4020 through a USB cable 4060. With the USB port 5063a connected to the USB port 4021 through the USB cable 4060, the multifunction apparatus 4010 is capable of receiving data, such as image data, in a hard disk (HD) 4022 from the host computer A 4020 through the USB cable 4060 and printing an image based on the received image data. The multifunction apparatus 4010 is also capable of indicating the own apparatus information to the host computer A 4020 through the USB cable 4060.

The network port 5062 in the multifunction apparatus 4010 is connected to a network port 4031 in a host computer B 4030 over a network 4050. The multifunction apparatus 4010 is capable of receiving data, such as image data, in a hard disk (HD) 4032 from the host computer B 4030 over the network 4050 and printing an image based on the received image data. The host computer B 4030 can use, for example, a Web browser program running on the host computer B 4030 to acquire apparatus information about the multifunction apparatus 4010 over the network 4050.

The USB port 5063b in the multifunction apparatus 4010 is connected to a USB memory 4040. The multifunction apparatus 4010 is capable of copying data, such as image data, stored in a nonvolatile memory (Mem) 4041 in the USB memory 4040 in response to an operation with the operation panel 5061 and printing an image based on the data. The multifunction apparatus 4010 may store data, such as image data, used in printing in the memory 5030 or in the hard disk 5067.

A basic print flow in the multifunction apparatus 4010 will now be described.

The print flow includes, for example, a print setting process, a data receiving process, an image-forming process, a paper-feeding process, a printing process, and a paper ejection process.

In the print setting process, processing conditions for image formation and so on are set before a job is input in response to an operation with the operation panel 5061 or at reception of information from the network 4050. In the data receiving process, information used for printing is received from another apparatus. Although the information of various formats can be received, data in the PDF format, which is one format of the PDL, is exemplified in the first exemplary embodiment. In the reception of data, the data is received from other apparatuses through the network port 5062 or the USB port 5063 or information is read out from a recording medium connected to the USB port 5063.

The image-forming process is realized by the image-forming unit 5031 shown in Fig. 1. In the image-forming process, an image is formed on the basis of the information received in the data receiving process. The received information may be image data itself or PDL data described in the PDL. When the received data is PDL data, the image-forming process is realized by an interpretation process in which the PDL data is interpreted by the interpreter 5032 and a rasterization process in which the PDL data is drawn as an image by the rasterizer 5033. Multiple types of interpreters 5032 may be installed in the multifunction apparatus 4010 depending on the printing languages. The same applies to the rasterizer 5033.

In the interpretation process, a drawing instruction sequence included in the PDL data is interpreted. The interpretation process is divided into a process of making drawing settings and an actual drawing process. The drawing process is further classified into an image data drawing process, a letter drawing process, and a graphic drawing process. In the rasterization process, lines and/or images are drawn in the frame buffer 5020 on the basis of the drawing instructions interpreted in the interpretation process.

In the paper-feeding process, the sheet set in the paper-feeding unit 5064 is fed to the printing unit 5065. The sheet to be fed is selected by the sheet-selecting unit 5038 on the basis of sheet selection data included in the PDL data or sheet selection settings included in the print settings. In the printing process, printing is performed on the sheet fed in the paper-feeding process. In the paper ejection process, the sheet subjected to the printing in the printing process is ejected from the multifunction apparatus. In addition to the above processes, the finishing unit 5066 may perform a finishing process. The finishing process includes, for example, stapling, punching, and shifting.

According to the embodiments of the present invention, the following three drawing modes are assumed for the sheet boundary box (media box) and the drawing boundary box (crop box) specified in the PDL data. The drawing modes are different from each other in the combination of the boundary boxes that are actually used. The three drawing modes are referred to as an OFFICE mode, a POD_1 mode, and a POD_2 mode in this specification.

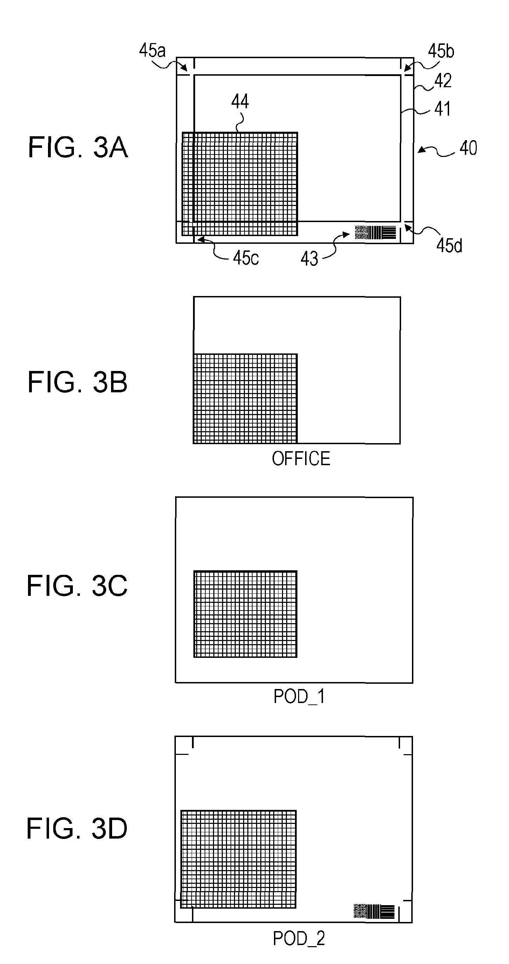

Figs. 3A to 3D show examples of print results in the above drawing modes. Fig. 3A shows original PDL data 40. A drawing boundary box 41 and a sheet boundary box 42 are specified for the PDL data 40. The PDL data 40 includes a color bar 43, a drawing content 44 including the bleed portion, and register marks 45a to 45d.

The sheet boundary box is described as the media box and the drawing boundary box is described as the crop box on the basis of the concept of the PDF data. However, a trim box indicating a finished sheet size and an art box indicating a content size may be considered. Furthermore, a preferred sheet size may be selected from three or more boundary boxes or a clipping range used in the drawing may be determined.

In the OFFICE mode (page saving mode), the drawing boundary box 41 is used as the reference boundary box on which selection of a sheet and specification of a drawing range are based. Fig. 3B shows an exemplary print result printed in the OFFICE mode. As shown in Fig. 3B, since the drawing boundary box 41 is used to select a sheet and to specify a drawing range in the OFFICE mode, it is possible to save the margin of a page.

In the POD_1 mode (full page printing mode with margin), the sheet boundary box 42 is used as the reference boundary box on which the selection of a sheet is based and the drawing boundary box 41 is used as the reference boundary box on which the specification of a drawing range is based. Fig. 3C shows an exemplary print result printed in the POD_1 mode. When the PDL data shown in Fig. 3A in which the sheet boundary box 42 does not agree with the drawing boundary box 41 is printed, the multifunction apparatus uses the sheet boundary box 42 to select a sheet while the multifunction apparatus 4010 selects the drawing boundary box 41 as the drawing size. Accordingly, in the POD_1 mode, even when the color bar 43, the bleed portion of the drawing content 44, and the register marks 45a to 45d are outside the drawing boundary box 41, they are not output (printed) because they are clipped off.

In the POD_2 mode (full page printing mode without margin), the sheet boundary box 42 is used as the reference boundary box on which the selection of a sheet and the specification of a drawing range are based. Fig. 3D shows an exemplary print result printed in the POD_2 mode. When the POD_2 mode is selected as in the example shown in Fig. 3D, the multifunction apparatus uses the sheet boundary box 42 to select a sheet and to specify a drawing range in the printing. Accordingly, it is possible to draw the full page including objects outside the drawing boundary box 41. The POD_2 mode differs from the POD_1 mode in that the data outside the drawing range can be printed.

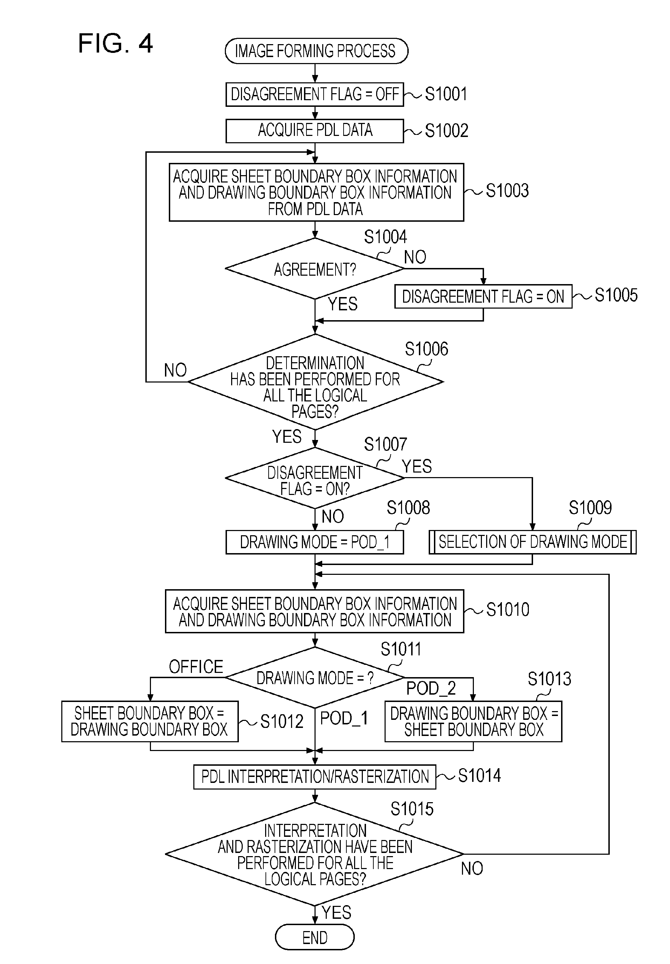

Fig. 4 is a flowchart showing an example of an image-forming process in the multifunction apparatus 4010 when the sheet boundary box 42 does not agree with the drawing boundary box 41 in the input PDL data. The basic print flow is the same as the one described above.

Referring to Fig. 4, in Step S1001, the region-resetting unit 5039 initializes a disagreement flag with "OFF". The disagreement flag indicates whether the sheet boundary box 42 agrees with the drawing boundary box 41 in all the pages included in PDL data, which is an example of print data. The disagreement flag is set to "OFF" if the sheet boundary box 42 agrees with the drawing boundary box 41 and the disagreement flag is set to "ON" if the sheet boundary box 42 does not agree with the drawing boundary box 41. The state of the disagreement flag is stored in, for example, the memory 5030.

In Step S1002, the interpreter 5032 acquires PDL data and stores the acquired PDL data in the memory 5030. Specifically, for example, the image-forming unit 5031 stores PDL data transmitted from the host computer B 4030 over the network 4050 through the network port 5062 in the memory 5030.

In Step S1003, the interpreter 5032 acquires information about the sheet boundary box 42 and information about the drawing boundary box 41, which are included in the acquired PDL data, for every logical page. According to the PDF specifications, the sheet boundary box 42 cannot be omitted whereas the drawing boundary box 41 may be omitted. When the drawing boundary box 41 is omitted, only the sheet boundary box 42 is acquired. According to the first exemplary embodiment, an acquiring unit is realized by Step S1003. The sheet boundary box 42 may be described as sheet size information concerning the size of a sheet and the drawing boundary box 41 may be described as drawing range size information concerning the size of a drawing range (refer to Figs. 3A to 3D).

In Step S1004, the interpreter 5032 determines whether the acquired sheet boundary box 42 agrees with the acquired drawing boundary box 41 for every logical page. According to the first exemplary embodiment, a determining unit is realized by Step S1004.

If the interpreter 5032 determines that the acquired sheet boundary box 42 does not agree with the acquired drawing boundary box 41, the process goes to Step S1005. In Step S1005, the interpreter 5032 sets the disagreement flag to "ON" and the process goes to Step S1006. If the interpreter 5032 determines that the acquired sheet boundary box 42 agrees with the acquired drawing boundary box 41, the process skips Step S1005 and goes to Step S1006.

In Step S1006, the interpreter 5032 determines whether the determination of whether the sheet boundary box 42 agrees with the drawing boundary box 41 has been performed for all the logical pages in the acquired PDL data. If the interpreter 5032 determines that the determination has not been performed for all the logical pages in the PDL data, the process goes back to Step S1003 and repeats Steps S1003 to S1006 until the determination has been performed for all the logical pages in the PDL data. The results of the determination of whether the sheet boundary box 42 agrees with the drawing boundary box 41 in all the logical pages are held in the disagreement flag.

In Steps S1007 to S1009, the region-resetting unit 5039 selects one of the drawing modes (the OFFICE mode, the POD_1 mode, and the POD_2 mode) on the basis of the state of the disagreement flag.

Specifically, in Step S1007, the region-resetting unit 5039 determines whether the disagreement flag is set to "ON". If the region-resetting unit 5039 determines that the disagreement flag is set to "OFF" (the determination in Step S1007 is negative), the sheet boundary box 42 agrees with the drawing boundary box 41 in all the pages. Accordingly, the same print result is attained regardless of the selected drawing mode. In this case, in Step S1008, the region-resetting unit 5039 sets the POD_1 mode as the drawing mode and the process goes to Step S1010.

If the region-resetting unit 5039 determines that the disagreement flag is set to "ON" (the determination in Step S1007 is affirmative), the processes by the print setting based region resetter 5035 and the print data based region resetter 5036 are performed. Specifically, in Step S1009, a drawing mode selection step is performed, in which a more preferred drawing mode is selected on the basis of the PDL data or the print setting information including image formation conditions and print conditions. According to the first exemplary embodiment, a first selecting unit is realized by Step S1009. The drawing mode selection step will be described in detail below.

The image formation is performed for each page included in the PDL data on the basis of the drawing mode selected by the region-resetting unit 5039 in Steps S1008 and S1009 described above.

In Step S1010, the interpreter 5032 acquires the sheet boundary box 42 and the drawing boundary box 41 again for all the pages in the PDL data. In Step S1011, the interpreter 5032 determines the drawing mode selected in Steps S1008 and S1009 described above.

When the selected drawing mode is the OFFICE mode, the drawing boundary box 41 for each page is used as the reference boundary box on which the selection of a sheet and the specification of a drawing range are based. Accordingly, in Step S1012, the interpreter 5032 replaces the sheet boundary box 42 with the drawing boundary box 41 in all the logical pages and the process goes to Step S1014 described below. It is sufficient for Step S1012 to be performed for pages in which the drawing boundary box does not agree with the sheet boundary box. When the selected drawing mode is the POD_1 mode, the boundary box on which the selection of a sheet and the specification of a drawing range are based is not specified. Accordingly, the interpreter 5032 continues the processing in accordance with the boundary boxes defined in the PDL data. In other words, the interpreter 5032 uses the sheet boundary box to select a sheet and uses the drawing boundary box to specify a drawing range. In this case, the process goes from Step S1011 to Step S1014 described below.

When the selected drawing mode is the POD_2 mode, the sheet boundary box 42 for each page is used as the reference boundary box on which the selection of a sheet and the specification of a drawing range are based. In this case, in Step S1013, the interpreter 5032 replaces the drawing boundary box 41 with the sheet boundary box 42 in all the logical pages and the process goes to Step S1014 described below. It is sufficient for Step S1013 to be performed for pages in which the drawing boundary box does not agree with the sheet boundary box.

As the result of the replacement of the boundary boxes, the sheet boundary box and/or the drawing boundary box corresponding to the drawing mode are specified for each logical page while the interpreter 5032 performs the interpretation. In Step S1014, the interpreter 5032 performs the interpretation and the rasterizer 5033 performs the rasterization on the basis of the specifications. Step S1014 results in generation of image data for every logical page and the generated image data is stored in the frame buffer 5020. According to the first exemplary embodiment, a first generating unit is realized by Step S1014.

In Step S1015, the interpreter 5032 determines whether the interpretation and the rasterization corresponding to the drawing mode have been performed for all the logical pages in the acquired PDL data. If the interpreter 5032 determines that the interpretation and the rasterization have not been performed for all the logical pages in the acquired PDL data, the process goes back to Step S1010 and repeats Steps S1010 to S1015 until the interpretation and the rasterization have been performed for all the logical pages in the acquired PDL data. If the interpretation and the rasterization have been performed for all the logical pages in the acquired PDL data, the image-forming process in Fig. 4 is terminated.

The image-forming unit 5031 performs the image-forming process for each page in accordance with the flowchart in Fig. 4. In parallel with the image-forming process, the sheet-selecting unit 5038 selects the sheet associated with the generated image data. The paper-feeding unit 5064 feeds the sheet selected by the sheet-selecting unit 5038 and the printing unit 5065 forms (prints) an image based on the image data stored in the frame buffer 5020 on the sheet fed by the paper-feeding unit 5064. The finishing unit 5066 performs the finishing process to the sheet on which the image is printed, if needed.

The drawing mode selection step in Step S1009 in Fig. 4 will now be described in detail. The drawing mode selection step is desirably composed of two parts. One part corresponds to a method in which the print setting based region resetter 5035 selects a preferable drawing mode on the basis of the print settings made by a person who performs the printing (hereinafter referred to as a user). The other part corresponds to a method in which the print data based region resetter 5036 estimates an output result intended by a data generator on the basis of the PDL data and selects a preferable drawing mode on the basis of the estimated result.

The selection of a drawing mode based on the print settings is preferably exemplified by N-up printing using an imposition function of the multifunction apparatus 4010. The information indicating the register marks 45a to 45d and the color bar 43 shown in Fig. 3A is auxiliary information used in the finishing process for the physical sheet. Imposition of the multiple logical pages to which such auxiliary information is added on one physical page in the multifunction apparatus 4010 makes the auxiliary information meaningless.

The same applies to a printing method called Fit To Page printing in which image data is resized in accordance with the sheet size. In other words, when the N-up printing or the Fit To Page printing is selected, it is often the case that only the drawing content 44 is required and output of the margin is not required.

In the print setting process described above, the print setting based region resetter 5035 associates the print settings which the user can make with the drawing modes preferable to the print settings in advance. The association allows an output result expected by the user (an intended output result) to be attained.

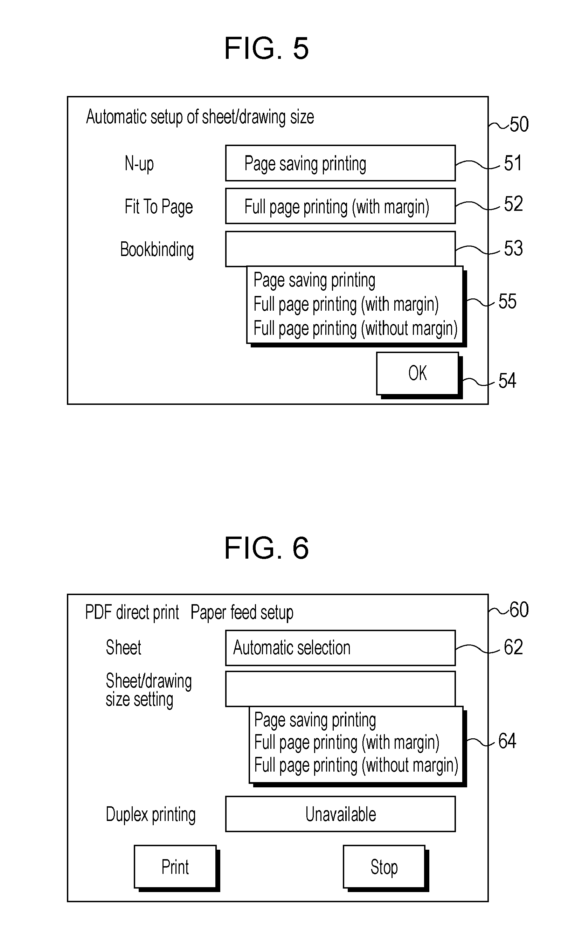

As a desired example of the above case, the CPU 5010 displays a graphical user interface 50 shown in Fig. 5 in the image display unit in the operation panel 5061. The user operates the operation panel 5061 (also referred to as an operation screen) to set the drawing mode for the print settings. In the example shown in Fig. 5, a field 51 indicates that the drawing in the OFFICE mode is set when the N-up printing is specified. A field 52 indicates that the drawing in the POD_1 mode is set when the Fit To Page printing is specified. A field 53 indicates that the drawing mode used when the bookbinding is specified is not specified. The content of the fields 51 to 53 is selected by the user from the items displayed in a pull-down menu 55.

Pressing an OK button 54 after the drawing mode is set for each printing setting (each of the N-up printing, the Fit To Page printing, and the bookbinding) in the above manner makes the print setting active. The print setting based region resetter 5035 registers the print settings in, for example, the memory 5030. In the subsequent steps in the image-forming process, the multifunction apparatus 4010 selects a drawing mode on the basis of the print settings specified by the user with the operation panel 5061. The direct print in which no printer driver is used is exemplified by a technology for mounting a removable medium in the multifunction apparatus to print PDL data in the removable medium. In this case, the user can print the PDL data in the removable medium and can set the print settings for the PDL data with the operation panel in the multifunction apparatus. The multifunction apparatus 4010 can use the print settings that have been made and the information registered with the graphical user interface 50 in Fig. 5 to select a drawing mode.

As described above, according to the first exemplary embodiment, a registering unit is realized by the print setting based region resetter 5035, which registers in advance the N-up printing, the Fit To Page printing, and the bookbinding, which are examples of the settings related to images, in association with the drawing modes.

The user may associate the available drawing modes with the print settings by default. In such a case, for example, the CPU 5010 displays a graphical user interface 60 shown in Fig. 6, in which paper-feed settings are made, in the image display unit in the operation panel 5061. The user operates the operation unit in the operation panel 5061 to select an item corresponding to a desired drawing mode from the items displayed in a pull-down menu 64. The drawing mode can be selected in the above manner when the paper-feed settings are made. It is preferred that the selection of the drawing mode be enabled only when automatic selection is specified in a field 62.

An exemplary method of estimating an output result intended by a data generator on the basis of the PDL data (print data) and selecting a drawing mode on the basis of the estimated result will now be described. The estimation and selection are performed by the print data based region resetter 5036. Specifically, the print data based region resetter 5036 determines whether the disagreement between the sheet boundary box 42 and the drawing boundary box 41 is intended by the data generator and selects a drawing mode on the basis of the determination result.

Standard sheet sizes are generally used for printing because of convenience. For example, "A" formats including "A3" and "A4", "B" formats including "B5" and "B4", a postcard size, and envelope sizes are widely used in Japan. Multiple types of standard formats are rarely used in one print. The print data based region resetter 5036 performs the processing on the basis of such features.

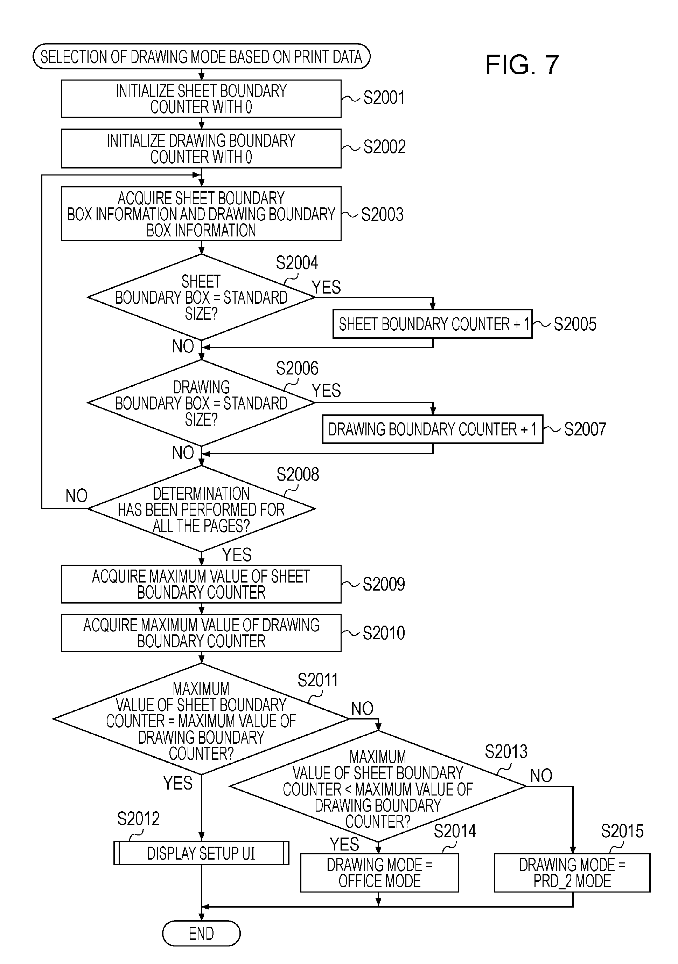

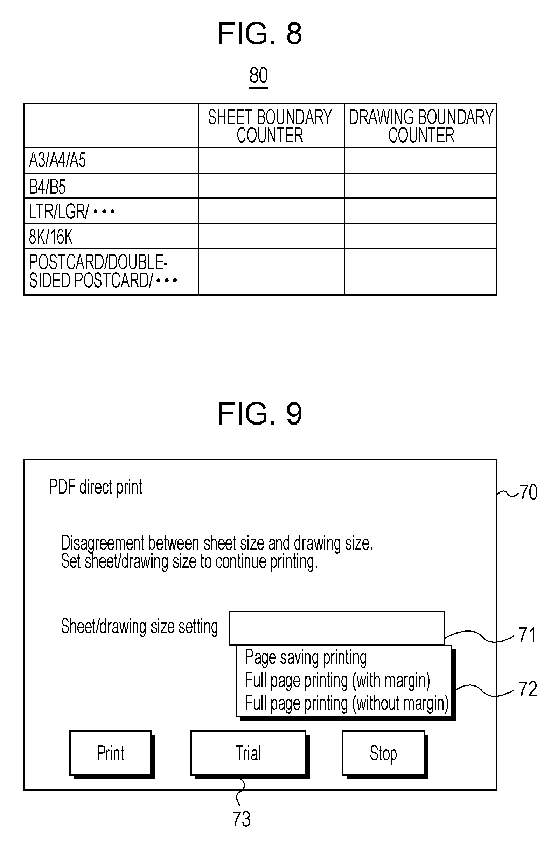

Fig. 7 is a flowchart showing an example of a method of selecting a drawing mode on the basis of PDL data. According to the first exemplary embodiment, when the print settings registered with the graphical user interface 50 shown in Fig. 5 are not specified by the user at the printing, a drawing mode is selected on the basis of PDL data in the following manner. Referring to Fig. 7, in Steps S2001 and S2002, the print data based region resetter 5036 initializes the values of a sheet boundary counter and a drawing boundary counter with zero. Fig. 8 shows an exemplary table 80 in which settings for the sheet boundary counter and the drawing boundary counter are stored. As shown in Fig. 8, the values of sheet boundary counter and the drawing boundary counter are set for the standard sheet sizes of the same format group.

Although the values of the sheet boundary counter and the drawing boundary counter are set for each format group including multiple standard sheet sizes in the example shown in Fig. 8, the table 80 may be created in another manner. The values of the sheet boundary counter and the drawing boundary counter may be set for each standard sheet size. The table 80 is stored in, for example, the memory 5030.

In Step S2003, the interpreter 5032 acquires information about the sheet boundary box and the drawing boundary box for every page.

In Step S2004, the print data based region resetter 5036 determines whether the sheet size specified by the sheet boundary box acquired in Step S2003 agrees with any of the standard sheet sizes registered in the table 80. According to the first exemplary embodiment, a first comparing unit is realized by Step S2004.

If the determination in Step 2004 is affirmative, then in Step S2005, the print data based region resetter 5036 adds one to the value in the corresponding field in the sheet boundary counter in the table 80 and the process goes to Step S2006. If the determination in Step S2004 is negative, the program skips Step S2005 and goes to Step S2006. According to the first exemplary embodiment, a first counting unit is realized by Step S2005. The first counting unit counts the number of pages in which the standard sheet sizes are set in the sheet boundary box.

In Step S2006, the print data based region resetter 5036 determines whether the size of the drawing range specified by the drawing boundary box acquired in Step S2003 agrees with any of the standard sheet sizes registered in the table 80. According to the first exemplary embodiment, a second comparing unit is realized by Step S2006.

If the determination in Step 2006 is affirmative, then in Step S2007, the print data based region resetter 5036 adds one to the value in the corresponding field in the drawing boundary counter in the table 80 and the process goes to Step S2008. If the determination in Step S2006 is negative, the program skips Step S2007 and goes to Step S2008. According to the first exemplary embodiment, a second counting unit is realized by Step S2007. The second counting unit counts the number of pages in which the standard sheet sizes are set in the drawing boundary box.

In Step S2008, the print data based region resetter 5036 determines whether the determination of whether the sizes defined by the boundary boxes agree with the standard sheet sizes has been performed for all the pages in the acquired PDL data. If the print data based region resetter 5036 determines that the determination has not been performed for all the pages in the PDL data, the process goes back to Step S2003 and repeats Steps S2003 to S2008 until the determination has been performed for all the pages in the PDL data.

The value of the boundary counter may not be incremented for the sheet types that should not be selected. For example, the standard sheet sizes "8K" and "16K" are used in China but are rarely used in Japan. Accordingly, the sheet types to be selected may be restricted in the multifunction apparatus 4010 used in Japan in order to avoid accidental agreement between the standard sheet sizes that are rarely used in Japan and the sizes specified by the boundary boxes. In other words, the standard sheet sizes that are rarely used in Japan may be set as the sheet types that should not be selected and the value of the boundary counter may not be incremented even when the size of such a sheet type agrees with the size specified by the boundary box.

In Step S2009, the print data based region resetter 5036 acquires the maximum value of the sheet boundary counter from the table 80. In Step S2010, the print data based region resetter 5036 acquires the maximum value of the drawing boundary counter from the table 80.

In Step S2011, the print data based region resetter 5036 determines whether the maximum value of the sheet boundary counter agrees with the maximum value of the drawing boundary counter. If the print data based region resetter 5036 determines that the maximum value of the sheet boundary counter agrees with the maximum value of the drawing boundary counter, it is difficult to estimate a drawing mode. Accordingly, in this case, in Step 2012, the CPU 5010 displays a graphical user interface 70 shown in Fig. 9 in the image display unit in the operation panel 5061 and causes the user to select a drawing mode.

The content corresponding to a drawing mode is displayed in a field 71 in the graphical user interface 70 in Fig. 9. The content of the field 71 is selected from the items displayed in a pull-down menu 72 by the user.

In the graphical user interface 70 shown in Fig. 9, the user can not only set the sheet/drawing size but also instruct trial printing. The user can press a Trial button 73 to display an image imitating the print result corresponding to the drawing mode selected from the items displayed in the pull-down menu 72 or to display in line the images imitating the print results corresponding to the drawing modes displayed in the pull-down menu 72.

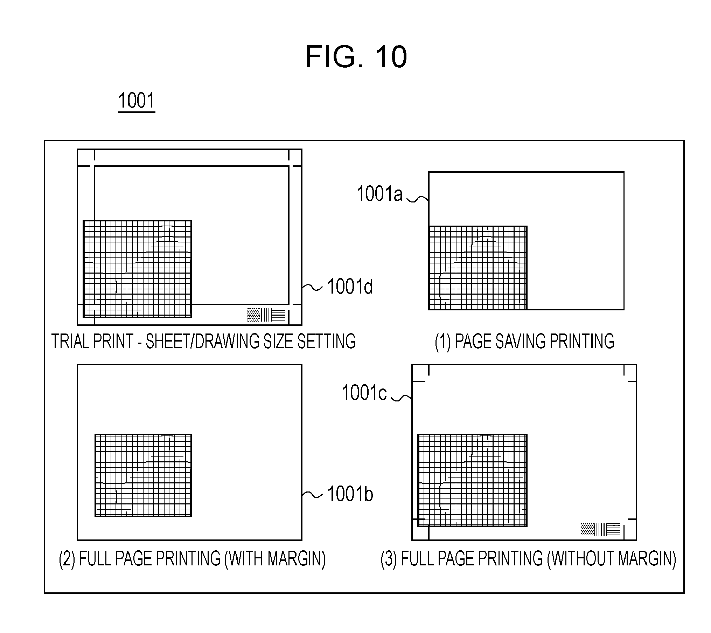

In order to support the selection step with the graphical user interface 70 shown in Fig. 9, the multifunction apparatus 4010 according to the first exemplary embodiment displays a screen shown in Fig. 10. Fig. 10 shows an exemplary screen 1001 in which the print results corresponding to the drawing modes are displayed. Referring to Fig. 10, images 1001a to 1001c imitating the print results corresponding to the OFFICE mode, the POD_1 mode, and the POD_2 mode are shown at the upper right, the lower left, and the lower right, respectively. An image 1001d based on the original PDL data including the sheet boundary box and the drawing boundary box is also shown at the upper left in Fig. 10. The user selects a drawing mode with the graphical user interface 70 in Fig. 9 with reference to the screen 1001 in Fig. 10.

Referring back to Fig. 7, if the print data based region resetter 5036 determines in Step S2011 that the maximum value of the sheet boundary counter does not agree with the maximum value of the drawing boundary counter, then in Step S2013, the print data based region resetter 5036 determines whether the maximum value of the drawing boundary counter is greater than the maximum value of the sheet boundary counter. The print data based region resetter 5036 uses the greater maximum value, among the maximum value of the drawing boundary counter and the maximum value of the sheet boundary counter, as the reference boundary box on which the selection of a sheet and the specification of a drawing range are based. Specifically, if the maximum value of the drawing boundary counter is greater than the maximum value of the sheet boundary counter, then in Step S2014, the print data based region resetter 5036 selects the OFFICE mode in which a sheet is selected and a drawing range is specified on the basis of the drawing boundary box. If the maximum value of the sheet boundary counter is greater than the maximum value of the drawing boundary counter, then in Step S2015, the print data based region resetter 5036 selects the POD_2 mode in which a sheet is selected and a drawing range is specified on the basis of the sheet boundary box.

Specific examples of the method of selecting a drawing mode on the basis of the PDL data shown in Fig. 7 will now be described.

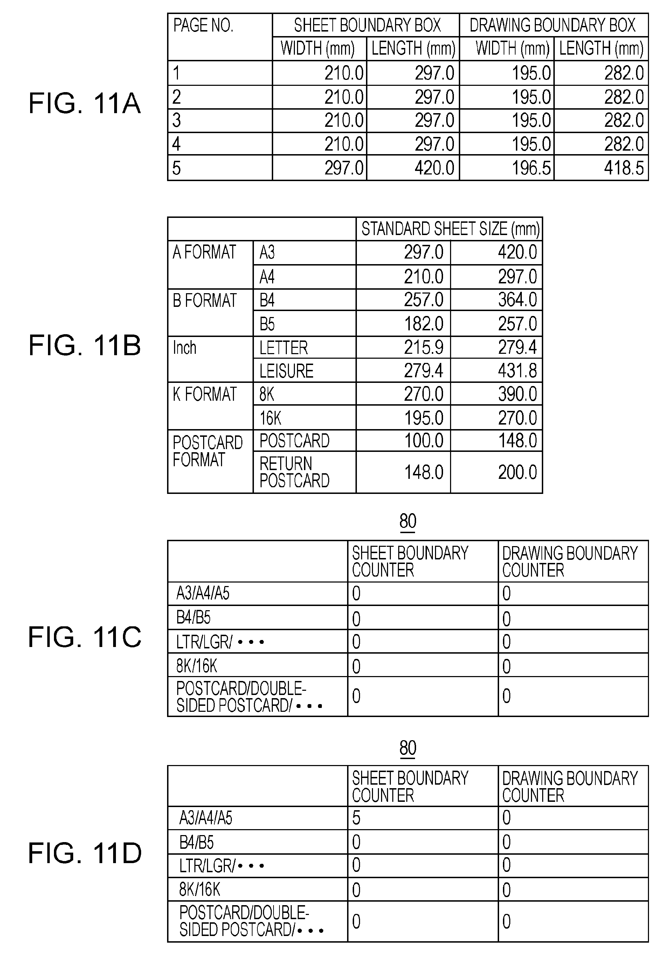

Figs. 11A to 11D show a first example of the method of selecting a drawing mode on the basis of the PDL data. Fig. 11A shows an example of PDL data. Fig. 11B shows examples of standard sheet sizes. Fig. 11C shows initial values of the table 80 shown in Fig. 8. Fig. 11D shows final settings of the table 80 shown in Fig. 8.

In the above first example, a drawing mode is selected on the basis of the PDL data composed of pages having the sheet boundary box and the drawing boundary box shown in Fig. 11A. In the PDL data shown in Fig. 11A, "A4" size is specified as the physical sheet for the first to fourth pages and "A3" is specified for the fifth page. The standard sheets sizes are shown in Fig. 11B.

First, the values of the sheet boundary counter and the drawing boundary counter are initialized with zero, as shown in Fig. 11C (Steps S2001 and S2002 in Fig. 7).

Next, the addition of one to the value of the boundary counter corresponding to the sheet type of the same size as the one defined by the sheet boundary box is performed for each page (Steps S2004 to S2008 in Fig. 7). The addition results in the values of the table 80 shown in Fig. 11D.

Then, the maximum values of the sheet boundary counter and the drawing boundary counter are acquired (Steps S2009 and S2010 in Fig. 7). Since the maximum value of the sheet boundary counter is greater than the maximum value of the drawing boundary counter in the example shown in Fig. 11D, the POD_2 mode output on the basis of the sheet boundary box is selected as the drawing mode (Step S2015 in Fig. 7).

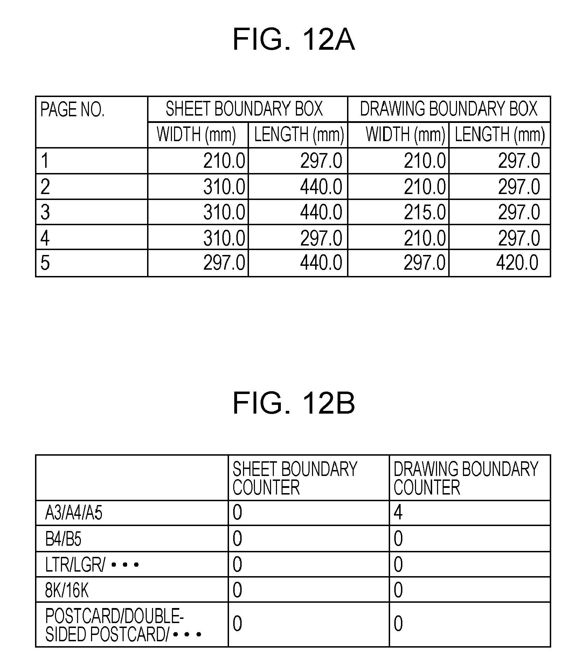

Figs. 12A and 12B show a second example of the method of selecting a drawing mode on the basis of the PDL data. Fig. 12A shows an example of PDL data. Fig. 12B shows final settings of the table 80 shown in Fig. 8. The standard sheet sizes and the initial values of the table 80 are the same as the ones shown in Figs. 11B and 11C.

In the above second example, a drawing mode is selected on the basis of the PDL data composed of pages having the sheet boundary box and the drawing boundary box shown in Fig. 12A. In the PDL data in Fig. 12A, it is assumed that the user resets the drawing boundary box on the basis of the data subjected to the imposition to generate the data for distribution. Fig. 12B shows the values of the boundary boxes in the table 80, which result from Steps S2001 to S2008 in Fig. 7 performed to the PDL data shown in Fig. 12A.

Since the maximum value of the drawing boundary counter is greater than the maximum value of the sheet boundary counter in the example shown in Fig. 12B, the OFFICE mode output on the basis of the drawing boundary box is selected as the drawing mode (Step S2014 in Fig. 7).

The method shown in Fig. 7 allows the printing allowing for the intention of the data generator. For example, when the number of the standard sheet sizes selected by the data generator in the sheet boundary counter is greater than the number thereof in the drawing boundary counter, the multifunction apparatus allows for the intention of the data generator who wants to perform the printing using the standard sheet size as the sheet size to select the POD_2 mode. The multifunction apparatus according to the embodiments of the present invention selects a drawing mode on the basis of the standard sheet size which the data generator intentionally selects.

As described above, according to the first exemplary embodiment of the present invention, the print settings are associated with the drawing modes in advance and, when the printing with print settings is specified, the printing is performed in the drawing mode associated with the print settings. In addition, the printing is performed in the drawing mode selected on the basis of the result of the comparison between the sheet size and the size of drawing range specified in the PDL data and the standard sheet sizes set in advance. Accordingly, even if the sheet size does not agree with the size of the drawing range in the PDL data, the intention of the user or the data generator in the selection of a sheet and the specification of a drawing range can be estimated. Consequently, it is possible to select a more preferable sheet and drawing range on the basis of the print settings and the PDL data even if the size of the drawing range does not agree with the sheet size in the PDL data.

In the selection of the drawing mode based on the PDL data, it is determined whether the sheet size (the size of the drawing range) defined by the boundary box agrees with any of the standard sheet sizes registered in the table 80 (Steps S2004 and S2006 in Fig. 7) in the first exemplary embodiment. However, it is not necessary to determine whether the sheet size (the size of the drawing range) defined by the boundary box completely agrees with any of the standard sheet sizes registered in the table 80. For example, it may be determined whether the difference between the sheet size (the size of the drawing range) defined by the boundary box and any of the standard sheet sizes registered in the table 80 (also referred to as reference sheet sizes) is not greater than a threshold value at which the sheet size (the size of the drawing range) can be assumed to agree with the standard sheet size.

"The maximum value of the sheet boundary counter and the maximum value of the drawing boundary counter" which agree with the standard sheet sizes registered in the table 80 are acquired and a drawing mode is selected in accordance with the relationship between the maximum value of the sheet boundary counter and the maximum value of the drawing boundary counter (Steps S2009 to S2015 in Fig. 7) in the first exemplary embodiment. However, a drawing mode may be selected on the basis of "the number of pages in the sheet boundary counter and the number of pages in the drawing boundary counter" which agree with the standard sheet sizes registered in the table 80. For example, the ratios of the numbers of pages in the sheet boundary counter and the drawing boundary counter agreeing with the standard sheet sizes to the number of pages in the PDL data may be calculated to select a drawing mode in accordance with the calculated ratios.

In the selection of a drawing mode based on the print settings, the print settings to be associated with the drawing modes are not restricted to the ones shown in Fig. 5 in the first exemplary embodiment. Specifically, although the N-up printing and the Fit To Page printing are registered as examples of the print settings related to the generation of the image data and the bookbinding is registered as an example of the print setting related to the finishing process in the graphical user interface 50 in Fig. 5, the print settings that are registered are not restricted to the ones in Fig. 5.

Although a drawing mode is selected on the basis of the PDL data when the drawing mode cannot be selected on the basis of the print settings in the first exemplary embodiment, the determination method is not restricted to the above one. For example, only one of the determinations may be performed. Alternatively, both the determination of a drawing mode on the basis of the print settings and the determination of a drawing mode on the basis of the PDL data may be performed. In this case, if the drawing mode selected on the basis of the print settings is different from the drawing mode selected on the basis of the PDL data, priority may be given to a drawing mode selected by a predetermined method or priority may be given to a drawing mode selected by a method specified by the user.

### Second Exemplary Embodiment

A second exemplary embodiment will now be described. The case where the PDL data is used in the printing is described in the first exemplary embodiment. However, in recent years, the PDL data is used in a wide range of fields including storage in storage media and data communication by facsimile, in addition to the printing. For this reason, a case where the PDL data is used in applications other than the printing is described in the second exemplary embodiment. The second exemplary embodiment mainly differs from the first exemplary embodiment described above in the application of the PDL data. Accordingly, the same reference numerals used in Figs. 1 to 12B are used in the second exemplary embodiment to identify the same components in the first exemplary embodiment. A detailed description of such components is omitted herein. The PDF data is exemplified in the second exemplary embodiment, as in the first exemplary embodiment.

An exemplary flow in which PDL data is converted into image data and the image data is stored in a storage medium is described.

The storage in a storage medium includes a storage setting process, a data receiving process, an image-forming process, a data compression process, and a recording process. A description of the data receiving process and the image-forming process is omitted herein because the data receiving process and the image-forming process are the same as the ones in the first exemplary embodiment. The storage setting process is similar to the print setting process in the first exemplary embodiment except that settings used in the storage of images are made instead of the print settings.

In the data compression process, image data stored in the frame buffer 5020 is compressed by the image-converting unit 5037 to save the file space for the storage. For example, an Modified Huffman (MH)/Modified Read (MR) format is used as the compression format for monochrome images while a Joint Photographic Experts Group (JPEG) format based on Discrete Cosine Transform (DCT) is used as the compression format for color images.

In the recording process, the image data compressed by the image-converting unit 5037 is stored in a specified storage medium. The storage of the image data in the hard disk 5067 in the multifunction apparatus 4010 eliminates the needs for the image-forming process when the printing is repeated. According to the second exemplary embodiment, a first storing unit is realized by storing the image data in the hard disk 5067, which is an example of the storage medium, in response to an instruction from the CPU 5010.

The image data stored in the hard disk 5067 in the above manner can be diverted to another apparatus. The stored image data can be subjected to another conversion. The stored image data can be directly printed or can be imposed and printed by a device. Accordingly, it is desirable that an image of the image data stored in the above manner be formed in the POD_2 mode, which uses the sheet boundary box as the reference boundary box, and information about the drawing boundary box be separately held.

Specifically, the CPU 5010 stores information about the drawing boundary box in the PDL data on which the image data stored in the above manner is based in, for example, the hard disk 5067 in association with the image data. According to the second exemplary embodiment, a second storing unit is realized by storing the information about the drawing boundary box in the hard disk 5067, which is an example of the storage medium, in response to an instruction from the CPU 5010.

When the image data stored in the above manner is printed, the region-resetting unit 5039 specifies the POD_2 mode. As a result, the sheet boundary box and/or the drawing boundary box corresponding to the drawing mode are specified for every logical page. According to the second exemplary embodiment, a second selecting unit is realized by the region-resetting unit 5039 that specifies the POD_2 mode.

The interpreter 5032 performs the interpretation and the rasterizer 5033 performs the rasterization in accordance with the POD_2 mode specified by the region-resetting unit 5039 in the above manner to generate image data. According to the second exemplary embodiment, a second generating unit is realized by the interpretation by the interpreter 5032 and the rasterization by the rasterizer 5033 in accordance with the POD_2 mode.

With the above processing, it is possible to eliminate the need for manual setup, unlike the technology disclosed in Japanese Patent Laid-Open No. 11-4339, and to divert the image data to another apparatus.

When image data is copied or moved, it is preferred that the image data be copied or moved along with information indicating that the printing is performed in the POD_2 mode and information about the drawing boundary box stored in association with the image data. This allows the drawing boundary box to be used as the reference boundary box on which the selection of a sheet and the specification of a drawing range are based also in the apparatus to which the image data is copied or moved.

### Third Exemplary Embodiment

A third exemplary embodiment will now be described. The multifunction apparatus 4010 causes the user to select a drawing mode with the graphical user interface 70 shown in Fig. 9 if the determination in Step S2011 in Fig. 7 is affirmative in the first exemplary embodiment. In contrast, according to the third exemplary embodiment, the graphical user interface 70 in Fig. 9 is displayed when a page in which the sheet boundary box does not agree with the drawing boundary box is detected.

Only dissimilarities from the first and second exemplary embodiments are described in the third exemplary embodiment and a detailed description of similarities to the first and second exemplary embodiments are omitted herein.

Step S1009 is performed if the determination in Step S1007 in Fig. 4 is affirmative in the first exemplary embodiment. The third exemplary embodiment differs from the first exemplary embodiment in that Step S2012 in Fig. 7 is performed if the determination in Step S1007 in Fig. 4 is affirmative.

Specifically, if the sheet boundary box does not agree with the drawing boundary box, the graphical user interface 70 in Fig. 9 is displayed.

The user can select a desired drawing mode with the graphical user interface 70 in Fig. 9 to realize the printing reflecting the intention of the user. Although the graphical user interface 70 in Fig. 9 is displayed in the third exemplary embodiment if the determination in Step S1007 in Fig. 4 is affirmative, the multifunction apparatus may display the screen 1001 shown in Fig. 10 to cause the user to select a drawing mode.

### Fourth Exemplary Embodiment

A fourth exemplary embodiment will now be described. In the first exemplary embodiment described above, the user selects a drawing mode corresponding to the set print settings, which are registered in association with the drawing modes. In contrast, a method of selecting a drawing mode on the basis of the print settings without imposing a load on the user is described in the fourth exemplary embodiment.

Only dissimilarities from the first to third exemplary embodiments are described in the fourth exemplary embodiment and a detailed description of similarities to the first to third exemplary embodiments are omitted herein.

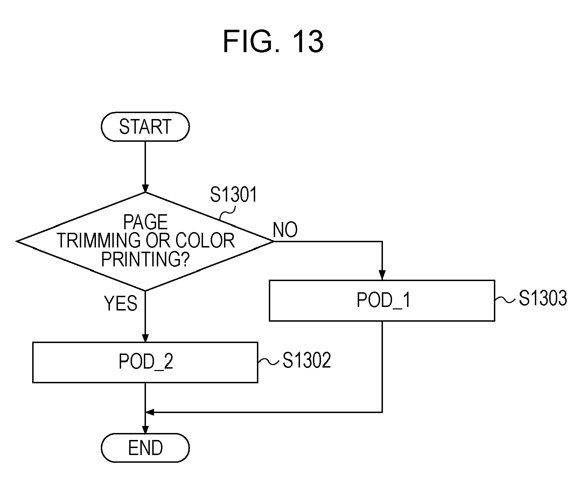

Fig. 13 is a flowchart illustrating a process according to the fourth exemplary embodiment. The process in Fig. 13 is performed if the determination in Step S1007 is affirmative after Steps S1001 to S1007 in Fig. 4 are performed.

In Step S1301, the CPU 5010 determines whether the print settings selected with the operation panel 5061 include at least one of page trimming in which a page is trimmed and color printing.

If the determination in Step S1301 is affirmative, then in Step S1302, the print data based region resetter 5036 selects the POD_2 mode as the drawing mode. Since it is necessary to print the color bar, the register marks, and so on outside the drawing range when the page trimming or the color printing is performed, the print data based region resetter 5036 selects the POD_2 mode in Step S1302 so as to print the color bar and the register marks.

If the determination in Step S1301 is negative, then in Step S1303, the print data based region resetter 5036 selects the POD_1 mode as the drawing mode because it is not necessary to print the color bar, the register marks, and so on.

Another determination step may be performed in Step S1301. For example, the CPU 5010 may determine whether data to be drawn exists outside the drawing range of the PDL data to be printed, in addition to the determination of whether the print settings selected with the operation panel 5061 include at least one of the page trimming and the color printing.

If the CPU 5010 determines that the print settings include at least one of the page trimming and the color printing and that data to be drawn exists outside the drawing range, the print data based region resetter 5036 selects the POD_2 mode.

According to the fourth exemplary embodiment of the present invention, it is possible to select an appropriate drawing mode in consideration of the set print settings without increasing the burden on the user even if the sheet boundary box does not agree with the drawing boundary box.

### Other Exemplary Embodiments

Each unit composing the image-processing apparatus and each step in the image-processing method according to the embodiments of the present invention are realized by running programs stored in the RAM or ROM in a computer. The programs and a computer-readable recording medium in which the programs are recorded are included in the present invention.

The present invention may be embodied by, for example, a system, an apparatus, a method, a program, or a storage medium. Specifically, the present invention is applicable to a system including multiple apparatuses and to an apparatus including one device.

The present invention may be embodied by directly or remotely supplying software programs (the programs corresponding to the flowcharts shown in Figs. 4 and 7) realizing the functions according to the above embodiments to a system or an apparatus, the computer in which system or apparatus reads out and executes the supplied program code.

In this case, the present invention is embodied by the program code itself installed in the computer to enable the computer to realize the functions of the embodiments of the present invention. In other words, the present invention is applicable to the computer programs themselves to realize the functions of the embodiments of the present invention.

The above programs may be object codes, programs executed by an interpreter, or script data supplied to the OS as long as they have the functions of the programs.

The recording medium supplying the programs may be any recording medium, such as a floppy disc^{®}, a hard disk, an optical disk, a magneto-optical disc (MO), a compact disc-read only memory (CD-ROM), a compact disc recordable (CD-R), a compact disc rewritable (CD-RW), a magnetic tape, a nonvolatile memory card, a ROM, or a digital versatile disc (DVD) (a DVD-ROM or a DVD-R).

Alternatively, the program may be supplied by accessing a Web page over the Internet by using the browser in a client computer to download the computer program itself according to the embodiments of the present invention or a compressed file including an automatic installation function from the Web page into a recording medium, such as a hard disk.

The program code composing the program of the present invention may be divided into multiple files, which are downloaded from different Web pages. In other words, a world wide web (WWW) server from which the program file for enabling the computer to realize the functions of the present invention is downloaded to multiple users is also included in the present invention.

The programs according to the embodiments of the present invention, which are encrypted and stored in a storage medium such as a CD-ROM, may be distributed to users. In this case, the users satisfying predetermined conditions may be allowed to download cryptographic-key information for deciphering the code from a Web page over the Internet and may execute and install the programs deciphered by using the downloaded cryptographic-key information in the computer.

The computer that executes the readout programs realizes the functions of the embodiments described above. In addition, the OS or the like running on the computer may execute all or part of the actual processing on the basis of instructions in the programs to realize the functions of the embodiments described above.

Alternatively, after the programs read out from the storage medium have been written in a memory that is provided in a function expansion board included in the computer or in a function expansion unit connected to the computer, the CPU or the like in the function expansion board or the function expansion unit may execute all or part of the actual processing on the basis of instructions in the programs to realize the functions of the embodiments described above.

While the present invention has been described with reference to exemplary embodiments, it is to be understood that the invention is not limited to the disclosed exemplary embodiments. The scope of the following claims is to be accorded the broadest interpretation so as to encompass all modifications and equivalent structures and functions.

## Claims

1. An image-processing apparatus comprising:
acquiring means (5032) configured to acquire sheet size information concerning a sheet size set for printing and drawing range size information concerning a drawing range size from print data;
determining means (5032) configured to determine whether the sheet size based on the sheet size information matches the drawing range size based on the drawing range size information;
first selecting means (5035, 5036) configured to select a sheet on which an image based on the print data is to be formed and a drawing range of the image on the basis of print setting information set for printing of the print data if the sheet size based on the sheet size information does not match the drawing range size based on the drawing range size information; and
first generating means (5032, 5033) configured to generate image data used for generating the image on the sheet by using the print data in accordance with the sheet and the drawing range selected by the first selecting means.

2. An image-processing apparatus according to Claim 1,
wherein the first selecting means is configured to select the sheet on which the image based on the print data is to be formed and the drawing range of the image by using the drawing range size information and the sheet size information set for each page in the print data if the sheet on which the image based on the print data is to be formed and the drawing range of the image cannot be selected on the basis of the print setting information.

3. An image-processing apparatus according to Claim 1 or claim 2, further comprising:
registering means configured to register the print setting information relating to the sheet on which an image is to be formed and the drawing range of the image,
wherein the first selecting means is configured to select the sheet on which an image is to be formed and the drawing range of the image using the registered setting information.

4. An image-processing apparatus according to Claim 3,
wherein the first selecting means includes:
first comparing means configured to compare, for every page of a document, the sheet size of a page, determined from the sheet size information, against reference sheet sizes;
first counting means configured to count the number of pages whose sheet size is a particular reference sheet size, a sheet size being a particular reference sheet size if the difference between the page sheet size and the reference sheet size is not greater than a threshold value;
second comparing means configured to compare, for every page of a document, the drawing range size of a page, determined from the drawing range size information, against the reference sheet sizes; and
second counting means configured to count the number of pages whose drawing range size is a particular reference sheet size, a drawing range size being a particular reference sheet size if the difference between the drawing range size and the reference sheet size is not greater than a threshold value, and
wherein the first selecting means is configured to select the sheet on which the image based on the print data is to be formed and the drawing range of the image on the basis of the numbers of pages counted by the first counting means and the second counting means.

5. An image-processing apparatus according to any preceding claim, further comprising:
first storing means configured to store the image data generated by the first generating means in a storage medium; and
second storing means configured to store the drawing range size information corresponding to the image data stored in the first storing means.

6. An image-processing apparatus according to Claim 5, further comprising:
second selecting means configured to select the sheet on which the image based on the image data stored in the first storing means is to be formed and the drawing range of the image on the basis of the drawing range size information corresponding to the image data; and
second generating means configured to generate an image based on the image data stored in the first storing means on the basis of the sheet and the drawing range selected by the second selecting means.

7. An image-processing apparatus according to any preceding claim,
wherein the first selecting means is configured to select the sheet on which the image based on the print data is to be formed and the drawing range of the image by using the sheet size information set for the print data if the set print setting information includes at least one of page trimming and color printing.

8. An image-processing apparatus according to Claim 1,
wherein the first selecting means is operable to:
select the sheet on which the image based on the print data is to be formed and the drawing range of the image in accordance with the sheet size based on the sheet size information,
select the sheet on which the image based on the print data is to be formed and the drawing range of the image in accordance with the drawing range size based on the drawing range size information, and
select the sheet on which the image based on the print data is to be formed in accordance with the sheet size based on the sheet size information and the drawing range of the image based on the print data in accordance with the drawing range size based on the drawing range size information.

9. An image-processing apparatus comprising:
acquiring means (5032) configured to acquire sheet size information concerning a sheet size set for printing and drawing range size information concerning a drawing range size from print data;
determining means (5032) configured to determine whether the sheet size based on the sheet size information matches the drawing range size based on the drawing range size information; and
selecting means (5010) configured to select a sheet based on the sheet size information or to select a sheet based on the drawing range size in accordance with an instruction input with an operation screen if the determining means determines that the sheet size based on the sheet size information does not match the drawing range size based on the drawing range size information.

10. An image-processing method comprising the steps of:
acquiring (S1003) sheet size information concerning a sheet size set for printing and drawing range size information concerning a drawing range size from print data;
determining (S1004) whether the sheet size based on the sheet size information matches the drawing range size based on the drawing range size information;
selecting (S1009) a sheet on which an image based on the print data is to be formed and a drawing range of the image on the basis of print setting information set for printing of the print data if the sheet size based on the sheet size information does not match the drawing range size based on the drawing range size information; and
generating (S1014) image data used for generating the image on the sheet by using the print data in accordance with the selected sheet and drawing range.

11. An image-processing method comprising the steps of:
acquiring (S1003) sheet size information concerning a sheet size set for printing and drawing range size information concerning a drawing range size from print data;
determining (S1004) whether the sheet size based on the sheet size information matches the drawing range size based on the drawing range size information; and
selecting (S2012) a sheet based on the sheet size information or a sheet based on the drawing range size in accordance with an instruction input with an operation screen if it is determined that the sheet size based on the sheet size information does not match the drawing range size based on the drawing range size information.

12. A program that, when executed by an image-forming apparatus, causes the image-forming apparatus to perform a method according to claim 10.

13. A program that, when loaded and executed by a computer or processor in an apparatus, causes the apparatus to become an image processing apparatus according to any of claims 1 to 9.

14. A program that, when executed by an image-processing apparatus, performs a method according to claim 11.

15. A computer-readable storage medium storing a program according to any one of claims 12 to 14.
